# EUROPEAN PATENT APPLICATION

(11) **EP 4 679 622 A1**
(43) Date of publication of application: **14.01.2026**
(21) Application number: 25184431.2
(22) Date of filing: 23.06.2025
(51) Int. Cl.: H01M 50/70, H01M 50/152, H01M 50/179, H01M 50/531, H01M 50/591

(54) **END COVER ASSEMBLY, ENERGY STORAGE APPARATUS, AND ELECTRICITY-CONSUMPTION DEVICE**

(30) Priority: 02.07.2024 CN 202421545259 U
(71) Applicant: Xiamen Hithium Energy Storage Technology Co., Ltd., Xiamen, Fujian 361100 (CN)
(72) Inventor: WANG, Feng, Xiamen, 361100 (CN)
(74) Representative: Mewburn Ellis LLP

(57) **Abstract**

An end cover assembly, an energy storage apparatus, and an electricity-consumption device are provided in the present disclosure. The end cover assembly includes an end cover (10), a lower plastic member (20), a terminal post (30), and a current-collector disk (60). The lower plastic member (20) includes a lower-plastic-member body (21) and a limiting protrusion portion (22). The limiting protrusion portion is implemented as two limiting protrusion portions that both protrude from the second surface. Each of the two limiting protrusion portions has a first sidewall surface (221), a second sidewall surface (222), and an end surface (223). The first sidewall surface is inclined. The second sidewall surface is inclined. The end surface is connected between the first sidewall surface and the second sidewall surface. Each of the two limiting protrusion portions defines a flow guiding groove (224). The current-collector disk (60) includes a connecting portion (62) and a disk body (61). In the thickness of the end cover assembly, the disk body (61) is positioned at one side of the two limiting protrusion portions (22) positioned facing away from the lower-plastic-member body (20). An orthographic projection of the disk body (61) on the second surface is positioned within the lower-plastic-member body (20). An orthographic projection of the end surface of each of the two limiting protrusion portions (22) on the second surface is positioned within the orthographic projection of the disk body (61) on the second surface. In the present disclosure, the utilization rate of the electrolyte can be improved.

## Description

### TECHNICAL FIELD

This disclosure relates to the field of energy storage technology, and in particular, to an end cover assembly, an energy storage apparatus, and an electricity-consumption device.

### BACKGROUND

A secondary battery, also known as a rechargeable battery or a storage battery, refers to a battery that can be charged to active substance of the battery for reuse after the battery is discharged. Since the secondary battery is reusable, the secondary battery gradually serves as a main power source for electricity-consumption devices. As the demand for the secondary battery gradually increases, people have higher requirements on the energy density, reliability, and cost of the secondary battery. In the related art, an electrolyte in an energy storage apparatus may enter a gap between a lower plastic member and an end cover due to vibration of the energy storage apparatus, thereby causing electrolyte accumulation in the gap between the lower plastic member and the end cover, resulting in a waste of the electrolyte.

### SUMMARY

An end cover assembly, an energy storage apparatus, and an electricity-consumption device are provided in the present disclosure, so that a utilization rate of an electrolyte can be improved.

In a first aspect of the present disclosure, an end cover assembly is provided. The end cover assembly includes an end cover, a lower plastic member, a terminal post, and a current-collector disk. The lower plastic member includes a lower-plastic-member body and a limiting protrusion portion. The end cover and the lower-plastic-member body are stacked in a thickness direction of the end cover assembly. The lower-plastic-member body has a first surface and a second surface positioned facing away from each other in the thickness direction of the end cover assembly. The first surface is positioned facing towards the end cover. The second surface is positioned facing away from the end cover. The terminal post passes through the end cover and the lower-plastic-member body. The limiting protrusion portion is implemented as two limiting protrusion portions that both protrude from the second surface. In a radial direction of the lower plastic member, the two limiting protrusion portions are symmetrically arranged about a central axis of the lower-plastic-member body. Each of the two limiting protrusion portions has a first sidewall surface, a second sidewall surface, and an end surface. In a direction from the second surface to the end surface, one end of the first sidewall surface is connected to a periphery of the lower-plastic-member body, and the other end of the first sidewall surface extends towards the central axis of the lower-plastic-member body. The second sidewall surface is positioned at one of two opposite sides of the first sidewall surface closer to a center of the lower-plastic-member body. In the direction from the second surface to the end surface, one end of the second sidewall surface is connected to the second surface, and the other end of the second sidewall surface extends towards the central axis of the lower-plastic-member body. The end surface is connected between the first sidewall surface and the second sidewall surface. Each of the two limiting protrusion portions defines a flow guiding groove. In the thickness direction of the end cover assembly, the flow guiding groove extends through the first surface and the end surface. The current-collector disk includes a connecting portion and a disk body. One end of the connecting portion is connected to the terminal post, and the other end of the connecting portion is connected to the disk body. In the thickness of the end cover assembly, the disk body is positioned at one side of the two limiting protrusion portions positioned facing away from the lower-plastic-member body. An orthographic projection of the disk body on the second surface is positioned within the second surface of the lower-plastic-member body. An orthographic projection of the end surface of each of the two limiting protrusion portions on the second surface is positioned within the orthographic projection of the disk body on the second surface.

In a possible implementation, the disk body has a first side-surface, a second side-surface, and a peripheral side surface. The first side-surface and the second side-surface are positioned facing away from each other in the thickness direction of the end cover assembly. The peripheral side surface is connected between the first side-surface and the second side-surface. The disk body defines a first welding groove and a second welding groove. The first welding groove is recessed from the first side-surface towards the second side-surface. The first welding groove extends through the peripheral side surface. The second welding groove is recessed from the first side-surface towards the second side-surface. The second welding groove extends through the peripheral side surface. In a radial direction of the end cover assembly, the first welding groove is spaced apart from and opposite to the second welding groove. In the thickness direction of the end cover assembly, the end surface of each of the two limiting protrusion portions is positioned facing towards the first side-surface. One of two flow guiding grooves is positioned facing towards and is in communication with the first welding groove, and the other of the two flow guiding grooves is positioned facing towards and is in communication with the second welding groove.

In a possible implementation, multiple reinforcing ribs are disposed in each flow guiding groove. Each of the multiple reinforcing ribs is connected between two groove sidewalls of the flow guiding groove that are positioned facing towards each other. In a length direction of the flow guiding groove, the multiple reinforcing ribs are spaced apart from each other, and the flow guiding groove is partitioned into multiple flow guiding sub-groove that are spaced apart from each other by the multiple reinforcing ribs.

In a possible implementation, each of two opposite ends of the first welding groove extends through the peripheral side surface. In a circumferential direction of the end cover assembly, the two opposite ends of the first welding groove are spaced apart from each other. Each of two opposite ends of the second welding groove extends through the peripheral side surface. In the circumferential direction of the end cover assembly, the two opposite ends of the second welding groove are spaced apart from each other. Two flow guiding sub-grooves at two ends of one of the two limiting protrusion portions are respectively positioned facing towards and are in communication with the two opposite ends of the first welding groove. Two flow guiding sub-grooves at two ends of the other of the two limiting protrusion portions are respectively positioned facing towards and are in communication with the two opposite ends of the second welding groove.

In a possible implementation, the disk body further defines multiple air-permeable holes. In the thickness direction of the end cover assembly, each of the multiple air-permeable holes extends through two surfaces of the disk body positioned facing away from each other.

In a possible implementation, each of two groove sidewalls of each flow guiding groove that are positioned facing towards each other is inclined. An inclination direction of each of the two groove sidewalls is identical to an inclination direction of the first sidewall surface.

In a possible implementation, the end cover has a mounting surface. The end cover is provided with a first snap-fit portion on the mounting surface. The lower-plastic-member body is provided with a second snap-fit portion on the first surface. The first surface abuts against the mounting surface, and the first snap-fit portion is snap-fitted with the second snap-fit portion.

In a second aspect of the present disclosure, an energy storage apparatus is provided. The energy storage apparatus includes a housing and the end cover assembly in the first aspect. The housing defines an accommodating cavity and an opening. The opening is positioned at one end of the accommodating cavity in a height direction of the energy storage apparatus. The opening is in communication with the accommodating cavity. The end cover is mounted at the opening. The lower plastic member is positioned in the accommodating cavity. In a radial direction of the energy storage apparatus, the two limiting protrusion portions are spaced apart from a cavity wall of the accommodating cavity.

In a possible implementation, the energy storage apparatus further includes an electrode assembly. The electrode assembly includes a tab. The tab is positioned at one end of the electrode assembly in a height direction of the electrode assembly. The electrode assembly is accommodated in the accommodating cavity. The tab is positioned facing towards the opening. In the height direction of the energy storage apparatus, the disk body is positioned between the electrode assembly and the lower plastic member. The disk body is stacked on the tab. The disk body is electrically connected to the tab. The connecting portion is stacked on one side of the disk body positioned facing away from the tab. The connecting portion is limited between the two limiting protrusion portions. In the height direction of the energy storage apparatus, an orthographic projection of the disk body on the electrode assembly is positioned within the electrode assembly.

In a third aspect of the present disclosure, an electricity-consumption device is provided. The electricity-consumption device includes the energy storage apparatus in the second aspect. The energy storage apparatus is configured to store electrical energy.

The beneficial effect of the present disclosure are as follows. When the electrolyte flows into the gap between the lower-plastic-member body and the end cover due to reasons such as vibration of the energy storage apparatus, the electrolyte can flow back to the disk body of the current-collector disk through the flow guiding groove, and then flows from the disk body of the current-collector disk to the end surface of the electrode assembly, thereby wetting the electrode assembly. The two limiting protrusion portions are arranged in an inclined manner, the disk body of the current-collector disk is positioned at one side of the two limiting protrusion portions facing away from the lower-plastic-member body, and the orthographic projection of the end surface of each of the two limiting protrusion portions on the second surface is positioned within the orthographic projection of the disk body on the second surface. Each of the two limiting protrusion portions defines the flow guiding groove, and the flow guiding groove extends through the first surface and the end surface. When the energy storage apparatus is turned upside down, the disk body of the current-collector disk can shield the flow guiding groove, thereby reducing the flow of electrolyte through the flow guiding grooves to the gap between the lower plastic member and the end cover, and avoiding a waste of electrolyte. Therefore, the utilization rate of the electrolyte can be improved in the present disclosure.

By providing the limiting protrusion portions on the lower plastic member, and positioning the limiting protrusion portions in the housing when the lower plastic member is mounted on the housing, the limiting protrusion portions can limit the lower plastic member, so that stability of the lower plastic member mounted in the housing is improved, and the lower plastic member is prevented from moving relative to the housing in the radial direction of the energy storage apparatus. The two limiting protrusion portions are both arranged in an inclined manner, so that the assembly effect of the lower plastic member and the housing can also be ensured, and when the lower plastic member is mounted on the housing, the limiting protrusion portions are prevented from scratching or interfering with the housing, thereby preventing the abnormal assembly between the lower plastic member and the housing. The orthographic projection of the disk body of the current-collector disk on the second surface is positioned within the second surface of the lower-plastic-member body, so that when the end cover assembly is assembled into the housing, interference between the disk body and the housing can also be prevented.

### BRIEF DESCRIPTION OF THE DRAWINGS

To describe the technical solutions of the present disclosure more clearly, the following briefly introduces the accompanying drawings required for describing the implementations. Apparently, the accompanying drawings in the following description show merely some implementations of the present disclosure, and those of ordinary skill in the art may also obtain other accompanying drawings based on these accompanying drawings without creative effort.
FIG. 1 is a schematic structural view of an energy storage apparatus provided in an embodiment of the present disclosure.
FIG. 2 is a partial exploded schematic structural view of the energy storage apparatus shown in FIG. 1.
FIG. 3 is a partial exploded schematic structural view of an end cover assembly of the energy storage apparatus shown in FIG. 2.
FIG. 4 is a partial exploded schematic structural view of the end cover assembly shown in FIG. 3 from another angle.
FIG. 5 is a partial schematic cross-sectional structural view of the energy storage apparatus shown in FIG. 1, taken along L-L.
FIG. 6 is a schematic view of an electricity-consumption device.

Description of reference signs of the accompanying drawings: 1000 - energy storage apparatus, 2000 - electricity-consumption device, 400 - housing, 410 - accommodating cavity, 420 - opening, 300 - electrode assembly, 100 - end cover assembly, 320 - tab, 30 - terminal post, 310 - winding core, 10 - end cover, 20 - lower plastic member, 40 - explosion-proof valve, 50 - explosion-proof sheet, 11 - passing-through surface, 12 - mounting surface, 13 - terminal-post hole, 14 - through groove, 15 - first snap-fit portion, 31 - flange, 32 - post body, 21 - lower-plastic-member body, 22 - limiting protrusion portion, 221 - first sidewall surface, 222 - second sidewall surface, 223 - end surface, 211 - first surface, 212 - second surface, 213 - terminal-post through-hole, 224 - flow guiding groove, 225 - reinforcing rib, 215 - second snap-fit portion, 214 - explosion-proof hole, 23 - explosion-proof mesh, 60 - current-collector disk, 61 - disk body, 62 - connecting portion, 611 - first side-surface, 612 - second side-surface, 613 - peripheral side surface, 614 - air-permeable hole, 615 - first welding groove, 616 - second welding groove, 617 - first welding protrusion, 618 - second welding protrusion.

### DETAILED DESCRIPTION

Technical solutions of embodiments in the present disclosure will be described clearly and completely below with reference to accompanying drawings in embodiments of the present disclosure. Apparently, embodiments described herein are merely some embodiments, rather than all embodiments, of the present disclosure. Based on embodiments of the present disclosure, all other embodiments obtained by those of ordinary skill in the art without creative effort shall fall within the protection scope of the present disclosure.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. At present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

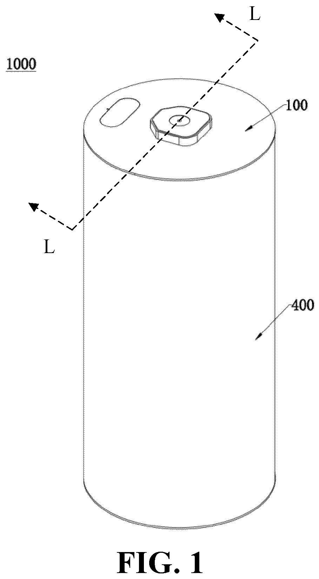

Reference can be made to FIG. 1, which is a schematic structural view of an energy storage apparatus 1000 provided in an embodiment of the present disclosure. The present disclosure provides an energy storage apparatus 1000. The energy storage apparatus 1000 includes one group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

The energy storage apparatus 1000 provided in the present disclosure may be applied in various application scenarios, including (wind/solar) power-generation-side energy storage, grid-side energy storage, base-station-side energy storage, user-side energy storage, etc. The energy-storage apparatus 100 is usually used in forms of an energy-storage container, a small and medium-sized energy-storage cabinet, a small-sized household energy-storage container, and the like. Devices such as the energy-storage container, the small and medium-sized energy-storage cabinet, and the small-sized household energy-storage container include the energy-storage apparatus 1000.

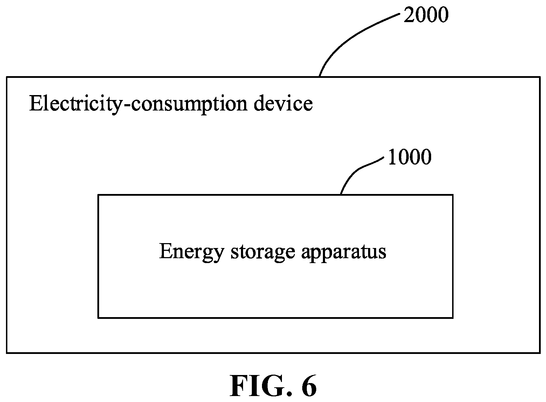

It may be noted that, the above devices including the energy-storage apparatus 100, such as the energy-storage container, the small and medium-sized energy-storage cabinet, and the small-sized household energy-storage container, can be understood as an electricity-consumption device 2000. Referring to FIG. 6, the electricity-consumption device 2000 includes the energy-storage apparatus 100.

The energy-storage apparatus 1000 may be implemented as multiple energy-storage apparatuses. The multiple energy-storage apparatuses 1000 are connected to each other in series or in parallel. In this embodiment, "multiple" refers to two or more.

In the present disclosure, "conducting" refers to an electrical connection, and conducting two conductive elements is equivalent to the electrical connection between two conductive elements. The manner of structurally connecting the two conductive elements includes, but is not limited to, welding the two conductive elements to each other, abutting surfaces of the two conductive elements against each other, and the like.

It can be understood that the energy storage apparatus 1000 may include, but is not limited to, an energy storage battery, an energy storage module, an energy storage pack, an energy storage system, an energy storage cluster, and the like. The actual application form of the energy storage apparatus 1000 provided in embodiments of the present disclosure may be, but not limited to, the listed products, and may also be other application forms. The embodiments of the present disclosure do not strictly limit the application form of the energy storage apparatus 1000. The embodiments of the present disclosure will be described only in an example where the energy storage apparatus 1000 is a energy storage battery.

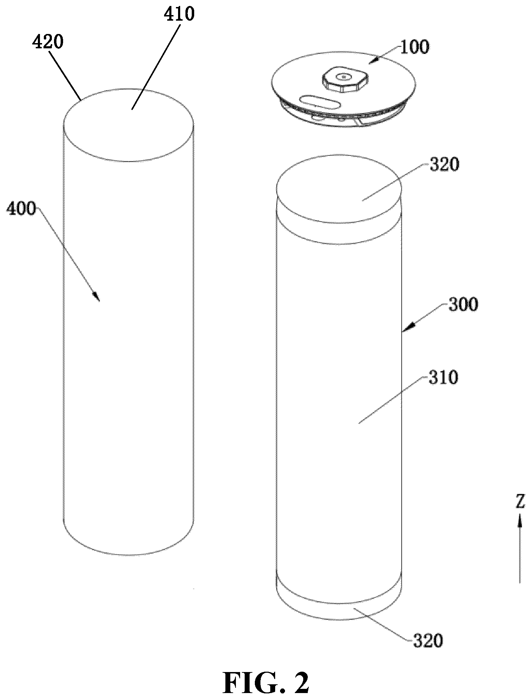

Referring to FIG. 1 and FIG. 2 in combination, FIG. 2 is a partial exploded schematic structural view of the energy storage apparatus 1000 shown in FIG. 1. For ease of description, in the present disclosure, a height direction of the energy storage apparatus 1000 is defined as a Z-axis direction.

In this embodiment, the energy storage apparatus 1000 includes a housing 400, an electrode assembly 300, and an end cover assembly 100. The housing 400 defines an opening 420 and an accommodating cavity 410. The electrode assembly 300 is accommodated in the accommodating cavity 410. The end cover assembly 100 is sealed at the opening 420. It can be understood that, the height direction of the energy storage apparatus 1000 is the thickness direction of the end cover assembly 100.

The electrode assembly 300 includes a winding core 310 and a tab 320. The winding core 310 is formed by winding a positive electrode, a negative electrode, and an insulating film positioned between the positive electrode and the negative electrode. Each of the positive electrode and the negative electrode each includes a first portion and a second portion, where the first portion is coated with an active material, and the second portion extends outwards from the first portion and is not coated with the active material. The tab 320 includes a negative tab and a positive tab, where the negative tab corresponds to the second portion that is on the negative tab and is not coated with the active material, and the positive tab corresponds to the second portion that is on the positive tab and is not coated with the active material. In the height direction of the winding core 310, the negative tab and the positive tab are respectively positioned at two opposite ends of the winding core 310.

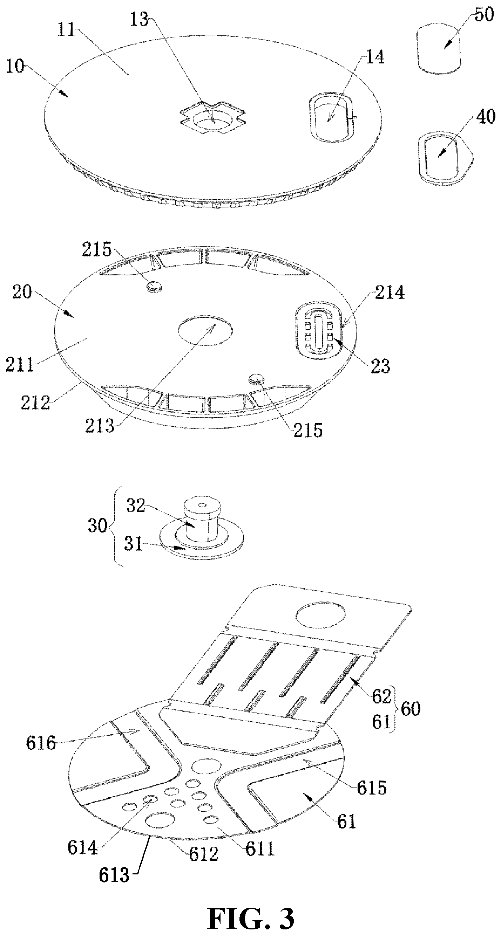

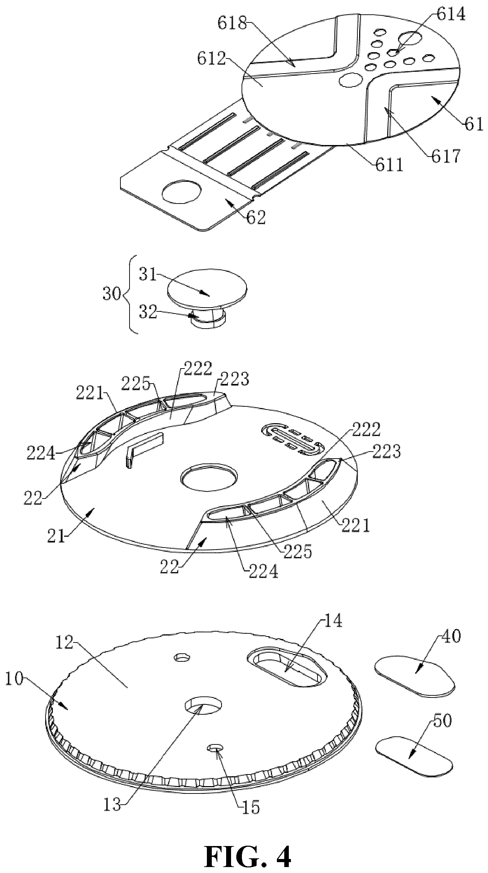

Referring to FIG. 2, FIG. 3, and FIG. 4 in combination, where FIG. 3 is a partial exploded schematic structural view of an end cover assembly 100 of the energy storage apparatus 1000 shown in FIG. 2, and FIG. 4 is a partial exploded schematic structural view of the end cover assembly shown in FIG. 3 from another angle.

In this embodiment, the end cover assembly 100 includes an end cover 10, a lower plastic member 20, a terminal post 30, and a current-collector disk 60. The end cover 10 and the lower plastic member 20 are stacked and may be fixedly connected to each other, and the lower plastic member 20 is configured to insulate the end cover 10 from the electrode assembly 300. The terminal posts 30 passes through the end cover 10 and the lower plastic member 20. In this embodiment, the end cover 10 is a smooth aluminum member. The lower plastic member 20 is made of a plastic material and is insulative. The current-collector disk 60 is positioned at one side of the lower plastic member 20 facing away from the end cover 10. The current-collector disk 60 is configured to electrically connect the terminal post 30 and the tab 320 of the electrode assembly 300. The end cover assembly 100 further includes an explosion-proof valve 40 and an explosion-proof sheet 50. The explosion-proof valve 40 and the explosion-proof sheet 50 are both mounted at the end cover 10.

It can be understood that, the terminal post 30 may be a positive terminal-post or a negative terminal-post. When the terminal post 30 of the end cover assembly 100 is connected to the negative tab of the electrode assembly 300 through the current-collector disk 60, the terminal post 30 is the negative terminal-post. When the terminal post 30 of the end cover assembly 100 is connected to the positive tab of the electrode assembly 300 through the current-collector disk 60, the terminal post 30 is the positive terminal-post. The embodiments of the present disclosure do not strictly limit this.

Referring to FIG. 3 and FIG. 4 again, in this embodiment, the end cover 10 has a circular plate shape. The end cover 10 has a passing-through surface 11 and a mounting surface 12. In the thickness direction of the end cover 10, the passing-through surface 11 and the mounting surface 12 are positioned facing away from each other. The end cover 10 defines a terminal-post hole 13 and a through groove 14. The terminal-post hole 13 is positioned at the middle of the end cover 10. In the thickness direction of the end cover 10, the terminal-post hole 13 extends through the passing-through surface 11 and the mounting surface 12. The terminal-post hole 13 allows for the terminal-post post 30 to pass through. The through groove 14 is spaced apart from the terminal-post hole 13. In the thickness direction of the end cover 10, the through groove 14 extends through the passing-through surface 11 and the mounting surface 12.

In this embodiment, the explosion-proof valve 40 is mounted at a groove wall of the through groove 14 of the end cover 10. The explosion-proof sheet 50 is mounted at the groove wall of the through groove 14 of the end cover 10. In the thickness direction (Z-axis direction) of the end cover assembly 100, the explosion-proof sheet 50 is close to the passing-through surface 11 of the end cover 10 with respect to the explosion-proof valve 40. The explosion-proof sheet 50 covers the explosion-proof valve 40.

In this embodiment, a first snap-fit portion 15 is formed on the mounting surface 12 of the end cover 10. Specifically, the first snap-fit portion 15 is a groove. In the thickness direction of the end cover, the first snap-fit portion 15 is recessed from the mounting surface 12 of the end cover 10, and the first snap-fit portion 15 is used for snap-in connection with the lower plastic member 20. The number of the first snap-fit portions 15 is two. In other embodiments, the first snap-fit portion 15 may be a protrusion. The first snap-fit portion 15 protrudes from the mounting surface 12 of the end cover 10 in the thickness direction of the end cover 10. The number of the first snap-fit portions 15 may also be one, three, four, or the like.

Referring to FIG. 3 and FIG. 4 again, the terminal post 30 includes a flange 31 and a post body 32. The post body 32 protrudes from a surface of the flange 31 in the thickness direction surface of the flange 31. The post body 32 is coaxial with the flange 31.

Referring to FIG. 3 and FIG. 4 again, in this embodiment, the lower plastic member 20 includes a lower-plastic-member body 21 and a limiting protrusion portion 22. The lower-plastic-member body 21 has a circular plate shape. The lower-plastic-member body 21 has a first surface 211 and a second surface 212. In the thickness direction of the lower plastic member 20, the first surface 211 and the second surface 212 are positioned facing away from each other. The lower-plastic-member body 21 has a central axis. The central axis of the lower-plastic-member body 21 is an axis passing through the center of the lower-plastic-member body 21 and extending in the thickness direction of the lower-plastic-member body 21. The lower-plastic-member body 21 defines a terminal-post through-hole 213. In the thickness direction of the lower plastic member 20, the terminal-post through-hole 213 extends through the first surface 211 and the second surface 212. The terminal-post through-hole 213 allows for the terminal post 30 to pass through. In this embodiment, a hole axis of the terminal-post through-hole 213 coincides with the central axis of the lower-plastic-member body 21. In other embodiments, the hole axis of the terminal-post through-hole 213 may also be offset from the central axis of the lower-plastic-member body 21.

The limiting protrusion portion 22 is substantially an arc-shaped strip. In the thickness direction of the lower plastic member 20, the limiting protrusion portion 22 protrudes from the second surface 212 of the lower-plastic-member body 21. There is an angle between the limiting protrusion portion 22 and the lower-plastic-member body 21. In this embodiment, the limiting protrusion portion 22 has a first sidewall surface 221, a second sidewall surface 222, and an end surface 223. In a direction from the second surface 212 to the end surface 223, one end of the first sidewall surface 221 is connected to a periphery of the lower-plastic-member body 21, and the other end of the first sidewall surface 221 extends towards the central axis of the lower-plastic-member body 21. In the radial direction of the lower plastic member 20, the second sidewall surface 222 is positioned at one of two opposite sides of the first sidewall surface 221 closer to the central axis of the lower-plastic-member body 21. One end of the second sidewall surface 222 is connected to the periphery of the lower-plastic-member body 21, and the other end of the second sidewall surface 222 extends towards the central axis of the lower-plastic-member body 21. In this embodiment, the second sidewall surface 222 is arc-shaped. The second sidewall surface 222 extends in the circumferential direction of the lower-plastic-member body 21. In the thickness direction of the lower plastic member 20, the end surface 223 is a surface of the limiting protrusion portion 22 away from the lower-plastic-member body 21. The end surface 223 is connected between the first sidewall surface 221 and the second sidewall surface 222.

In other embodiments, the second sidewall surface 222 may be flat or wave-shaped. The present disclosure does not specifically limit the shape of the second sidewall surface 222.

The limiting protrusion portion 22 defines a flow guiding groove 224. In the thickness direction of the lower plastic member 20, the flow guiding groove 224 extends through the first surface 211 of the lower-plastic-member body 21 and the end surface 223 of the limiting protrusion portion 22. The flow guiding groove 224 defines a first opening on the first surface 211 and a second opening on the end surface 223. The flow guiding groove 224 allows for the electrolyte to flow.

In the width direction of the flow guiding groove 224, the flow guiding groove 224 has two groove sidewalls positioned facing towards each other. It can be understood that, the two groove sidewalls of the flow guiding groove 224 are both part of the limiting protrusion portion 22. The flow guiding groove 224 has two groove sidewalls positioned facing towards each other. In this embodiment, each of the two groove sidewalls of the flow guiding groove 224 that are positioned facing towards each other is inclined, and an inclination direction of each of the two groove sidewalls is identical to an inclination direction of the first sidewall surface 221.

In other embodiments, the two sidewalls of the flow guiding groove 224 that are positioned facing towards each other may extend in the thickness direction of the lower plastic member 20.

Multiple reinforcing ribs 225 are disposed in the flow guiding groove 224. Each of the multiple reinforcing ribs 225 is connected between the two groove sidewalls of the flow guiding groove 224 that are positioned facing towards each other. In the length direction of the flow guiding groove 224, the multiple reinforcing ribs 225 are spaced apart from each other, and the flow guiding groove 224 is partitioned into multiple flow guiding sub-grooves that are spaced apart from each other by the multiple reinforcing ribs 225. Two adjacent flow guiding sub-grooves are spaced apart from each other by one reinforcing rib 225.

In this embodiment, the number of the limiting protrusion portions 22 is two. In the radial direction of the lower plastic member 20, the two limiting protrusion portions 22 are spaced apart from and opposite to each other. The two limiting protrusion portions 22 are symmetrically arranged about the central axis of the lower-plastic-member body 21.

It can be understood that, each of the first sidewall surface 221 and the second sidewall surface 222 of the limiting protrusion portion 22 is inclined, so that the two groove sidewalls of the flow guiding groove 224 that are positioned facing towards each other is inclined, and the inclination direction of each of the two groove sidewalls is identical to each of the inclination direction of the first sidewall surface 221 and the inclination direction of the second sidewall surface 222. Each of the first opening defined by the flow guiding groove 224 on the first surface 211 and the second opening defined by the flow guiding groove 224 on the end surface 223 can have the relatively large width. Therefore, it can be ensured that the electrolyte can quickly flow out of the second opening after entering the flow guiding groove 224 through the first opening. Thus, the electrolyte is prevented from staying on the first surface 211 of the lower-plastic-member body 21, thereby reducing the usage efficiency of the electrolyte.

By providing the multiple reinforcing ribs 225 between the two groove sidewalls of the flow guiding groove 224 that are positioned facing towards each other, the overall structural strength of the limiting protrusion portion 22 can be reinforced, and the service life of the lower plastic member 20 can be prolonged. Therefore, the weakening of the structural strength of the limiting protrusion portion 22 due to definition of the flow guiding groove 224 is prevented, thereby preventing the limiting protrusion portion 22 from being easily damaged.

Referring to FIG. 4 again, in this embodiment, a second snap-fit portion 215 is formed on the first surface 211 of the lower plastic member 20. Specifically, the second snap-fit portion 215 is a protrusion. In the thickness direction of the end cover 10, the second snap-fit portion 215 protrudes from the first surface 211 of the lower-plastic-member body 21. The number of the second snap-fit portions 215 is two.

In other embodiments, when the first snap-fit portion 15 is a protrusion, the second snap-fit portion 215 is a groove correspondingly. In the thickness direction of the lower plastic member 20, the second snap-fit portion 215 is recessed from the first surface 211. The number of the second snap-fit portions 215 may also be one, three, four, or the like.

The lower-plastic-member body 21 further defines an explosion-proof hole 214. In the radial direction of the lower plastic member 20, the explosion-proof hole 214 is positioned between the two limiting protrusion portions 22 and is spaced apart from the terminal-post through-hole 213. In the thickness direction of the lower plastic member 20, the explosion-proof hole 214 extends through the first surface 211 and the second surface 212.

In this embodiment, the lower plastic member 20 further includes an explosion-proof mesh 23. The explosion-proof mesh 23 is mounted at the hole wall of the explosion-proof hole 214.

Referring to FIG. 3 and FIG. 4 again, in this embodiment, the current-collector disk 60 includes a disk body 61 and a connecting portion 62. The disk body 61 is a circular disk body. The disk body 61 has a first side-surface 611, a second side-surface 612, and a peripheral side surface 613. The first side-surface 611 and the second side-surface 612 are positioned facing away from each other in the thickness direction of the current-collector disk 60. The peripheral side surface 613 is connected between the first side-surface 611 and the second side-surface 612. The diameter of the disk body 61 is smaller than the diameter of the electrode assembly 300. The diameter of the disk body 61 is smaller than the diameter of the lower-plastic-member body 21. The diameter of the disk part 61 is larger than the diameter of the circumcircle of the end surfaces 223 of the two limiting protrusion portions 22.

The disk body 61 defines a first welding groove 615 and a second welding groove 616. In the radial direction of the disk body 61, the first welding groove 615 is spaced apart from and opposite to the second welding groove 616.

In the thickness direction of the disk body 61, the first welding groove 615 is recessed from the first side-surface 611 towards the second side-surface 612, and protrudes from the second side-surface 612 to form a first welding protrusion 617. In the radial direction of the disk body 61, the first welding groove 615 extends through the peripheral side surface 613. In this embodiment, the first welding groove 615 is in a broken-line shape. Each of the two opposite ends of the first welding groove 615 extends through the peripheral side surface 613. In other embodiments, the first welding groove 615 may be in other shapes such as an arc shape. The first welding groove 615 may have only one end extending through the peripheral side surface 613. Exemplarily, the first welding groove 615 is linear.

In the thickness direction of the disk body 61, the second welding groove 616 is recessed from the first side-surface 611 towards the second side-surface 612, and protrudes from the second side-surface 612 to form a second welding protrusion 618. In the radial direction of the disk body 61, the second welding groove 616 extends through the peripheral side surface 613. In this embodiment, the second welding groove 616 is in a broken-line shape. Each of the two opposite ends of the second welding groove 616 extends through the peripheral side surface 613. In other embodiments, the second welding groove 616 may be in other shapes such as an arc shape. Exemplarily, the second welding groove 616 is linear.

The disk body 61 further defines multiple air-permeable holes 614. In the thickness direction of the current-collector disk 60, each of the multiple air-permeable holes 614 extends through the first side-surface 611 and the second side-surface 612. The multiple air-permeable holes 614 are spaced apart from the first welding groove 615 and the second welding groove 616.

The connecting portion 62 is a substantially rectangular sheet. In the length direction of the connecting portion 62, one end of the connecting portion 62 is connected to the first side-surface 611 of the disk body 61, and the other end of the connecting portion 62 extends away from the disk body 61. The connecting portion 62 is offset from the first welding groove 615, the second welding groove 616, and the multiple air-permeable holes 614 of the disk body 61. In other words, the connecting portion 62 does not shield the first welding groove 615, the second welding groove 616, and the multiple air-permeable holes 614. The connecting portion 62 is parallel to the disk body 61 (with an allowable dimensional tolerance). The connecting portion 62 is foldable with respect to the disk body 61.

In other embodiments, one end of the connecting portion 62 in the length direction of the connecting portion 62 may be connected to the peripheral side surface 613 of the disk body 61.

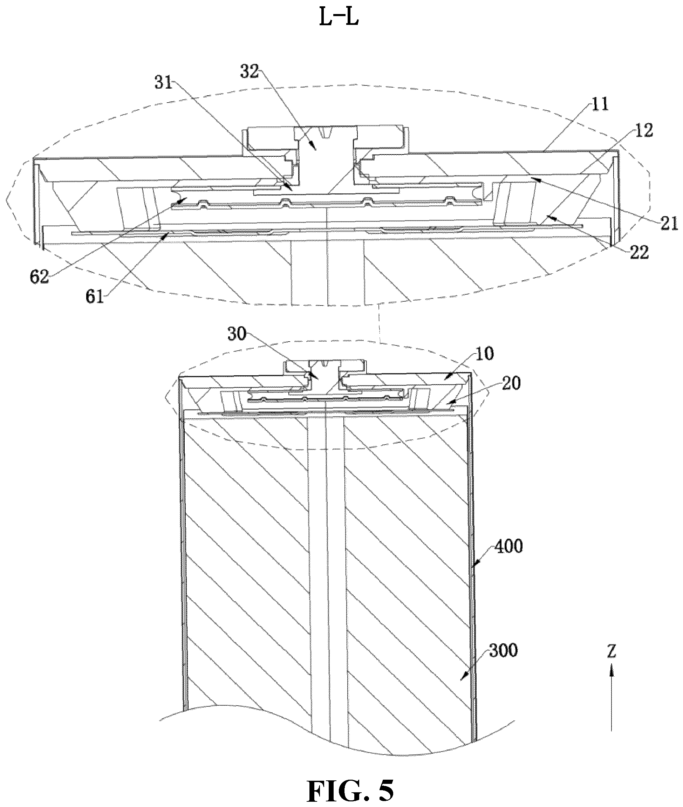

Reference can be made to FIG. 5, which is a partial schematic cross-sectional structural view of the energy storage apparatus 1000 shown in FIG. 1. In this embodiment, the lower plastic member 20 is stacked on the mounting surface 12 of the end cover 10. Specifically, the first surface 211 of the lower-plastic-member body 21 abuts against the mounting surface 12 of the end cover 10. The second snap-fit portion 215 of the lower plastic member 20 is snap-fitted with the first snap-fit portion 15 of the end cover 10. The terminal-post hole 13 of the end cover 10 is coaxial with the terminal-post through-hole 213 of the lower plastic member 20. In the thickness direction (Z-axis direction) of the end cover assembly 100, the through groove 14 of the end cover 10 is positioned facing towards and in communication with the explosion-proof hole 214. The flange 31 of the terminal post 30 abuts against the second surface 212 of the lower-plastic-member body 21. The post body 32 passes through the terminal-post through-hole 213 of the lower plastic member 20 and the terminal-post hole 13 of the end cover 10.

It can be understood that, the first snap-fit portion 15 is disposed on the end cover 10, the second snap-fit portion 215 is disposed on the lower plastic member 20, and when the lower plastic member 20 is stacked on the end cover 10, the first snap-fit portion 15 is snap-fitted with the second snap-fit portion 215. Therefore, the assembly stability of the lower plastic member 20 and the end cover 10 can be improved, and the lower plastic member 20 is prevented from moving relative to the end cover 10.

The connecting portion 62 of the current-collector disk 60 is folded with respect to the disk body 61. The connecting portion 62 is stacked on the disk body 61. The connecting portion 62 is limited between the two limiting protrusion portions 22 of the lower plastic member 20. In the height direction (Z-axis direction) of the energy storage apparatus 1000, the connecting portion 62 is positioned at one side of the flange 31 of the terminal post 30 facing away from the lower-plastic-member body 21. The connecting portion 62 is electrically connected to the terminal post 30. In the thickness direction (Z-axis direction) of the energy storage apparatus 1000, the disk body 61 of the current-collector disk 60 is positioned at one side of the two limiting protrusion portions 22 facing away from the lower-plastic-member body 21. An orthographic projection of the disk body 61 on the second surface 212 of the lower-plastic-member body 21 is positioned within the second surface 212 of the lower-plastic-member body 21. The disk body 61 is spaced apart from and positioned facing towards the two limiting protrusion portions 22. The end surfaces 223 of each of the two limiting protrusion portions 22 is positioned facing towards the first side-surface 611 of the disk body 61. An orthographic projection of the end surface 223 of each of the two limiting protrusion portions 22 on the second surface 212 of the lower-plastic-member body 21 is positioned within the orthographic projection of the disk body 61 on the second surface 212 of the lower-plastic-member body 21. One flow guiding groove 224 is positioned facing towards and in communication with the first welding groove 615, and the other flow guiding groove 224 is positioned facing towards and in communication with the second welding groove 616. Specifically, two flow guiding sub-grooves at two ends of one limiting protrusion portion 22 are respectively positioned facing towards and in communication with two opposite ends of the first welding groove 615; and two flow guiding sub-grooves at two ends of the other limiting protrusion portion 22 are respectively positioned facing towards and in communication with the two opposite ends of the second welding groove 616.

In other embodiments, it is also possible that other flow guiding sub-grooves in one limiting protrusion portion 22 are positioned facing towards and in communication with the first welding groove 615; and other flow guiding sub-grooves in the other limiting protrusion portion 22 are positioned facing towards and in communication with the second welding groove 616. Exemplarily, the first welding groove 615 is linear, and the first welding groove 615 extends in the radial direction of the disk body 61; and one middle flow guiding sub-groove in one limiting protrusion portion 22 is positioned facing towards and in communication with the first welding groove 615. The second welding groove 616 is linear, and the second welding groove 616 extends in the radial direction of the disk body 61; and one middle flow guiding sub-groove in the other limiting protrusion portion 22 is positioned facing towards and in communication with the second welding groove 616.

In this embodiment, the winding core 310 is accommodated in the accommodating cavity 410 of the housing 400. The tab 320 is positioned at one side of the winding core 310 facing towards the opening 420. The end cover assembly 100 is sealed at the opening 420 of the housing 400. Specifically, the end cover 10 is mounted at the opening 420 of the housing 400. The periphery of the end cover 10 is connected to an edge of the opening 420 of the housing 400. The lower plastic member 20 is positioned in the accommodating cavity 410. In the radial direction of the energy storage apparatus 1000, each of the two limiting protrusion portions 22 is spaced apart from the cavity wall of the accommodating cavity 410 of the housing 400. In the height direction (Z-axis direction) of the energy storage apparatus 1000, the current-collector disk 60 is positioned between the electrode assembly 300 and the lower plastic member 20. The disk body 61 of the current-collector disk 60 is stacked on the tab 320 of the electrode assembly 300. The first welding protrusion 617 and the second welding protrusion 618 of the disk body 61 are both welded and connected to the tab 320 of the electrode assembly 300. In the height direction (Z-axis direction) of the energy storage apparatus 1000, the orthographic projection of the disk body 61 of the current-collector disk 60 on the electrode assembly 300 is positioned within the electrode assembly 300.

It can be understood that, in the present disclosure, the two limiting protrusion portions 22 are inclined, the disk body 61 of the current-collector disk 60 is positioned at one side of the two limiting protrusion portions 22 away from the lower-plastic-member body 21. The disk body 61 is spaced apart from and positioned facing towards the two limiting protrusion portions 22. In the height direction (Z-axis direction) of the energy storage apparatus 100, the orthographic projection of the end surface 223 of each of the two limiting protrusion portions 22 on the second surface 212 is positioned within the orthographic projection of the disk body 61 on the second surface 212. Each of the two limiting protrusion portions 22 defines the flow guiding groove 224, and the flow guiding groove 224 extends through the first surface 211 and the end surface 223. The flow guiding groove 224 forms a first opening and a second opening on the first surface 211 and the end surface 223, respectively. When the energy storage apparatus 1000 is turned upside down, the disk body 61 of the current-collector disk plate 60 can shield the flow guiding groove 224, thereby reducing the flow of electrolyte through the flow guiding groove 224 to the gap between the lower plastic member 20 and the end cover 10, and avoiding the waste of electrolyte. Therefore, the utilization rate of the electrolyte can be improved in the present disclosure.

When the electrolyte flows into the gap between the lower-plastic-member body 21 and the end cover 10 due to reasons such as vibration of the energy storage apparatus 1000, the electrolyte can flow back to the disk body 61 of the current-collector disk 60 through the flow guiding groove 224. The current-collector disk 60 defines the multiple air-permeable holes 614 through which the electrolyte can flow to the tab 320 and then flow from the tab 320 to the winding core 310. Therefore, the utilization rate of the electrolyte and the wettability of the electrode assembly 300 are improved. In the height direction (Z-axis direction) of the energy storage apparatus 1000, the orthographic projection of the disk body 61 of the current-collector disk 60 on the electrode assembly 300 is positioned within the electrode assembly 300, so that the electrolyte falling on the disk body 61 may also flow into the winding core 310 from the edge of the disk body 61, thereby avoiding the following. The electrolyte flows from the edge of the disk body 61 to the space between the electrode assembly 300 and the cavity wall of the accommodating cavity of the housing 400, and the insulating film on the periphery of the winding core 310 blocks the electrolyte from entering the winding core 310, resulting in the waste of the electrolyte. Thus, the wettability of the electrode assembly 300 can be improved, and the utilization rate of the electrolyte can be improved.

In addition, in the height direction (Z-axis direction) of the energy storage apparatus 1000, the end surface 223 of each of the two limiting protrusion portions 22 is positioned facing towards the first side-surface 611 of the disk body 61, one flow guiding groove 224 is positioned facing towards and in communication with the first welding groove 615, and the other flow guiding groove 224 is positioned facing towards and in communication with the second welding groove 616. Therefore, the electrolyte flowing out of one flow guiding groove 224 may also fall into the first welding groove 615, and then flow into the electrode assembly 300 from the first welding groove 615 through the edge of the disk body 61; and the electrolyte flowing out of the other flow guiding groove 224 may also fall into the second weld groove 616, and then flow into the electrode assembly 300 from the second weld groove 616 through the edge of the disk body 61. Thus, the rate at which the electrolyte flows into the electrode assembly 300 can be increased.

In addition, in the present disclosure, by providing the limiting protrusion portions 22 on the lower plastic member 20, and positioning the limiting protrusion portions 22 in the housing 400 when the lower plastic member 20 is mounted on the housing 400, the limiting protrusion portions 22 can limit the lower plastic member 20, so that stability of the lower plastic member 20 mounted in the housing 400 is improved, and the lower plastic member 20 is prevented from moving relative to the housing 400 in the radial direction of the energy storage apparatus 1000.

In the radial direction of the energy storage apparatus 1000, the two limiting protrusion portions 22 are both arranged in an inclined manner, so that the assembly effect of the lower plastic member 20 and the housing 400 can be ensured, thereby avoiding the following when the lower plastic member 20 is mounted on the housing 400. The limiting protrusion portions 22 scratch or interfere with the housing 400, resulting in the abnormal assembly of the lower plastic member 20 and the housing 400; or the lower plastic member 20 or the housing 400 is locally damaged, resulting in affecting the normal use of the lower plastic member 20 or the housing 400. In addition, the orthographic projection of the disk body 61 of the current-collector disk 60 on the second surface 212 is positioned within the second surface 212 of the lower-plastic-member body 21, so that when the end cover assembly 100 is assembled into the housing 400, the structural integrity of the disk body 61 can also be ensured, and interference between the disk body 61 and the housing 400 is prevented avoided, thereby preventing the disk body 61 from damaging.

The above embodiments in the present disclosure are described in detail. Principles and implementations of the present disclosure are elaborated with specific examples herein. The above illustration of embodiments is only used to help to understand methods and core ideas of the present disclosure. At the same time, for those skilled in the art, according to ideas of the present disclosure, there will be changes in specific implementations and application scope. In summary, contents of this specification should not be understood as limitation on the present disclosure.

## Claims

1. An end cover assembly (100), comprising an end cover (10), a lower plastic member (20), a terminal post (30), and a current-collector disk (60); wherein
the lower plastic member (20) comprises a lower-plastic-member body (21) and a limiting protrusion portion (22), the end cover (10) and the lower-plastic-member body (21) are stacked in a thickness direction of the end cover assembly (100), the lower-plastic-member body (21) has a first surface (211) and a second surface (212) positioned facing away from each other in the thickness direction of the end cover assembly (100), the first surface (211) is positioned facing towards the end cover (10), the second surface (212) is positioned facing away from the end cover (10), and the terminal post (30) passes through the end cover (10) and the lower-plastic-member body (21);
the limiting protrusion portion (22) is implemented as two limiting protrusion portions (22) that both protrude from the second surface (212), and in a radial direction of the lower plastic member (20), the two limiting protrusion portions (22) are symmetrically arranged about a central axis of the lower-plastic-member body (21);
each of the two limiting protrusion portions (22) has a first sidewall surface (221), a second sidewall surface (222), and an end surface (223); in a direction from the second surface (212) to the end surface (223), one end of the first sidewall surface (221) is connected to a periphery of the lower-plastic-member body (21), the other end of the first sidewall surface (221) extends towards the central axis of the lower-plastic-member body (21), and the second sidewall surface (222) is positioned at one of two opposite sides of the first sidewall surface (221) closer to a center of the lower-plastic-member body (21); and in the direction from the second surface (212) to the end surface (223), one end of the second sidewall surface (222) is connected to the second surface (212), the other end of the second sidewall surface (222) extends towards the central axis of the lower-plastic-member body (21), and the end surface (223) is connected between the first sidewall surface (221) and the second sidewall surface (222);
each of the two limiting protrusion portions (22) defines a flow guiding groove (224), and in the thickness direction of the end cover assembly (100), the flow guiding groove (224) extends through the first surface (211) and the end surface (223); and
the current-collector disk (60) comprises a connecting portion (62) and a disk body (61), one end of the connecting portion (62) is connected to the terminal post (30), and the other end of the connecting portion (62) is connected to the disk body (61); in the thickness of the end cover assembly (100), the disk body (61) is positioned at one side of the two limiting protrusion portions (22) positioned facing away from the lower-plastic-member body (21); and an orthographic projection of the disk body (61) on the second surface (212) is positioned within the second surface (212) of the lower-plastic-member body (21), and an orthographic projection of the end surface (223) of each of the two limiting protrusion portions (22) on the second surface (212) is positioned within the orthographic projection of the disk body (61) on the second surface (212).

2. The end cover assembly (100) of claim 1, wherein the disk body (61) has a first side-surface (611), a second side-surface (612), and a peripheral side surface (613), the first side-surface (611) and the second side-surface (612) are positioned facing away from each other in the thickness direction of the end cover assembly (100), and the peripheral side surface (613) is connected between the first side-surface (611) and the second side-surface (612);
the disk body (61) defines a first welding groove (615) and a second welding groove (616), the first welding groove (615) is recessed from the first side-surface (611) towards the second side-surface (612), and the first welding groove (615) extends through the peripheral side surface (613); the second welding groove (616) is recessed from the first side-surface (611) towards the second side-surface (612), and the second welding groove (616) extends through the peripheral side surface (613); and in a radial direction of the end cover assembly (100), the first welding groove (615) is spaced apart from and opposite to the second welding groove (616); and
in the thickness direction of the end cover assembly (100), the end surface (223) of each of the two limiting protrusion portions (22) is positioned facing towards the first side-surface (611), one of two flow guiding grooves (224) is positioned facing towards and is in communication with the first welding groove (615), and the other of the two flow guiding grooves (224) is positioned facing towards and is in communication with the second welding groove (616).

3. The end cover assembly (100) of claim 2, wherein a plurality of reinforcing ribs (225) are disposed in each flow guiding groove (224), each of the plurality of reinforcing ribs (225) is connected between two groove sidewalls of the flow guiding groove (224) that are positioned facing towards each other; and in a length direction of the flow guiding groove (224), the plurality of reinforcing ribs (225) are spaced apart from each other, and the flow guiding groove (224) is partitioned into a plurality of flow guiding sub-groove that are spaced apart from each other by the plurality of reinforcing ribs (225).

4. The end cover assembly (100) of claim 3, wherein each of two opposite ends of the first welding groove (615) extends through the peripheral side surface (613), and in a circumferential direction of the end cover assembly (100), the two opposite ends of the first welding groove (615) are spaced apart from each other;
each of two opposite ends of the second welding groove (616) extends through the peripheral side surface (613), and in the circumferential direction of the end cover assembly (100), the two opposite ends of the second welding groove (616) are spaced apart from each other; and
two flow guiding sub-grooves at two ends of one of the two limiting protrusion portions (22) are respectively positioned facing towards and are in communication with the two opposite ends of the first welding groove (615), and two flow guiding sub-grooves at two ends of the other of the two limiting protrusion portions (22) are respectively positioned facing towards and are in communication with the two opposite ends of the second welding groove (616).

5. The end cover assembly (100) of claim 4, wherein the disk body (61) further defines a plurality of air-permeable holes (614), and in the thickness direction of the end cover assembly (100), each of the plurality of air-permeable holes (614) extends through two surfaces of the disk body (61) positioned facing away from each other.

6. The end cover assembly (100) of any one of claims 1 to 5, wherein each of two groove sidewalls of each flow guiding groove (224) that are positioned facing towards each other is inclined, and an inclination direction of each of the two groove sidewalls is identical to an inclination direction of the first sidewall surface (221).

7. The end cover assembly (100) of claim 6, wherein the end cover (10) has a mounting surface (12), the end cover (10) is provided with a first snap-fit portion (15) on the mounting surface (12), and the lower-plastic-member body (21) is provided with a second snap-fit portion (215) on the first surface (211); and
the first surface (211) abuts against the mounting surface (12), and the first snap-fit portion (15) is snap-fitted with the second snap-fit portion (215).

8. An energy storage apparatus (1000), comprising a housing (400) and the end cover assembly (100) of any one of claims 1 to 7, wherein the housing (400) defines an accommodating cavity (410) and an opening (420), the opening (420) is positioned at one end of the accommodating cavity (410) in a height direction of the energy storage apparatus (1000), and the opening (420) is in communication with the accommodating cavity (410); and
the end cover (10) is mounted at the opening (420), the lower plastic member (20) is positioned in the accommodating cavity (410), and in a radial direction of the energy storage apparatus (1000), the two limiting protrusion portions (22) are spaced apart from a cavity wall of the accommodating cavity (410).

9. The energy storage apparatus (1000) of claim 8, further comprising an electrode assembly (300), wherein the electrode assembly (300) comprises a tab (320), and the tab (320) is positioned at one end of the electrode assembly (300) in a height direction of the electrode assembly (300); and
the electrode assembly (300) is accommodated in the accommodating cavity (410), and the tab (320) is positioned facing towards the opening (420); in the height direction of the energy storage apparatus (1000), the disk body (61) is positioned between the electrode assembly (300) and the lower plastic member (20), and the disk body (61) is stacked on the tab (320); the disk body (61) is electrically connected to the tab (320), the connecting portion (62) is stacked on one side of the disk body (61) positioned facing away from the tab (320), and the connecting portion (62) is limited between the two limiting protrusion portions (22); and in the height direction of the energy storage apparatus (1000), an orthographic projection of the disk body (61) on the electrode assembly (300) is positioned within the electrode assembly (300).

10. An electricity-consumption device (2000), comprising the energy storage apparatus (1000) of any one of claims 8 to 9, wherein the energy storage apparatus (1000) is configured to store electrical energy.
